# EUROPEAN PATENT APPLICATION

(11) **EP 1 394 890 A2**
(43) Date of publication of application: **03.03.2004**
(21) Application number: 03017483.3
(22) Date of filing: 01.08.2003
(51) Int. Cl.: H01M 10/50, H01M 6/50, H01M 2/10, G05D 23/00

(54) **Heat control device for battery**

(30) Priority: 29.08.2002 JP 2002250902
(71) Applicant: Matsushita Electric Industrial Co., Ltd., Kadoma-shi, Osaka-fu 571-8501 (JP)
(72) Inventor: Kimiya, Hirokazu, Kyoto-shi, Kyoto 601-1332 (JP); Morigaki, Kenichi, Nishinomiya-shi, Hyogo 663-8024 (JP); Watanabe, Kozo, Osaka-shi, Osaka 532-0022 (JP)
(74) Representative: Grünecker, Kinkeldey, Stockmair & Schwanhäusser Anwaltssozietät

(57) **Abstract**

The heat control device for a battery of the present invention contains i) a radiator for dissipating heat that has generated in a battery through a charging and discharging process; and ii) a heat controller that transforms its shape by heat. The structure can protect a battery from anomalous overheating. On the other hand, when the temperature of the battery falls down, the device protects the battery not only from over-dissipating, but also from degradation in output power characteristics of the battery.

## Description

### TECHNICAL FIELD

The present invention relates to a heat control device for a battery that controls dissipation of heat generated from the battery in the wake of a charging and discharging process.

### BACKGROUND ART

Electronic equipment that runs on a secondary battery, such as an alkaline storage battery, a lead acid battery, and a lithium-ion secondary battery, accommodates such batteries in a limited space within the structure. To respond the needs for smooth operations with a large current, smallsealed batteries with high performance, for example, a lithium-ion secondary battery and a nickel-metal-hydride (NiMH) battery, have to cope with high-output pulse discharge and quick charge. Such a demanded condition increases heat generation from a battery, which often invites deterioration in the electrolyte of the battery. This can shorten the lifetime of the battery.

Generally, the electrolyte of a lithium-ion secondary battery and an NiMH battery is deteriorated at the temperatures beyond 40 °C, which causes deterioration of the batteries. Therefore, the battery should be heat-dissipated so as not to reach the temperature.

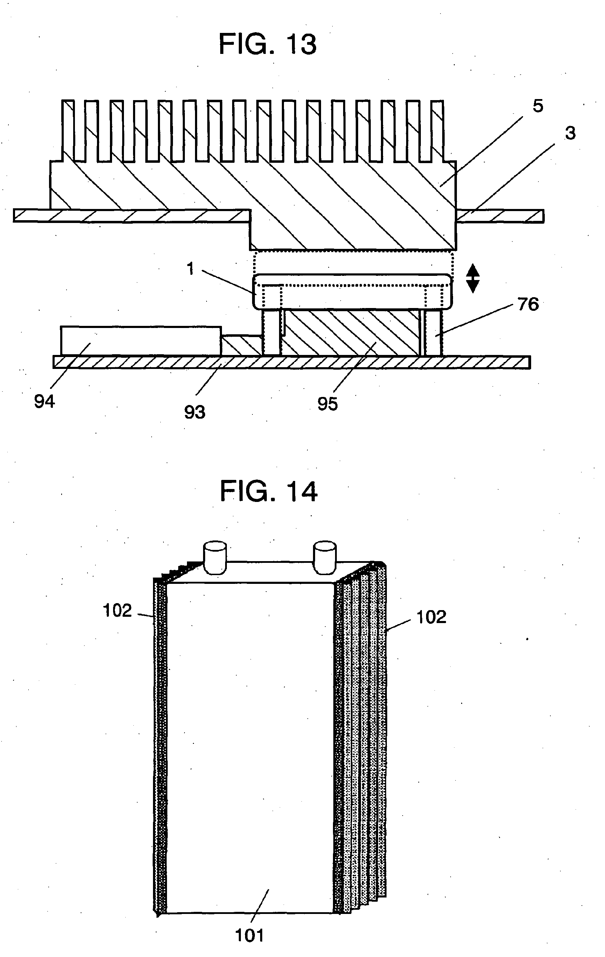

A prior-art radiator for batteries is described, for example, in Japanese Patent Non-examined Publication No. H10-302734. Fig. 14 is a perspective view of the radiator introduced in the publication. For effective heat radiation, battery container 101 has radiation fins 102 on the surfaces of the container in the widthwise direction. Such structured fins 102, however, deprive a battery of heat even under low-temperature conditions with no need for heat dissipation. The battery therefore cannot increase the temperature by self-heating, accordingly, internal resistance of the battery increases, which extremely degrades power output characteristics of the battery.

To solve the problem above, Japanese Patent Non-examined Publication No. H9-298070 introduces an air-conditioning mechanism dedicated for controlling battery temperature. According to the structure, however, it becomes necessary for an extra space for the air-conditioning mechanism, other than that for batteries. The structure is not suitable, due to its poor mountability and high production cost, for compact electronic equipment.

### DISCLOSURE OF THE INVENTION

The heat control device for a battery of the present invention contains i) a radiator for dissipating heat from a battery generated through the charging and discharging process; and ii) a heat controller that transforms its shape with the application of the heat.

### BRIEF DESCRIPTION OF THE DRAWINGS

Figs. 1 and 2 show partially sectional views of a structure of a heat control device for a battery in accordance with a first exemplary embodiment of the present invention.
Fig. 3 shows a partially sectional view of another structure of the heat control device for a battery of the first exemplary embodiment.
Figs. 4 and 5 show partially sectional views of a structure of a heat control device for a battery in accordance with a second exemplary embodiment.
Fig. 6 shows a partially sectional view of a structure of a heat control device for a battery of a third exemplary embodiment.
Fig. 7 shows a partially sectional view of another structure of the heat control device for a battery of the third exemplary embodiment.
Fig. 8 shows a partially sectional view of a structure of a heat control device for a battery in accordance with a fourth exemplary embodiment.
Fig. 9 shows a partially sectional view of a structure of a heat control device for a battery in accordance with a fifth exemplary embodiment.
Fig. 10 shows a partially sectional view of a structure of a heat control device for a battery in accordance with a sixth exemplary embodiment.
Fig. 11 shows a partially sectional view of a structure of a heat control device for a battery in accordance with a seventh exemplary embodiment.
Fig. 12 is a perspective view illustrating a heat controller of a heat control device for a battery in accordance with an eighth exemplary embodiment.
Fig. 13 shows a partially sectional view of a structure of a heat control device for a battery in accordance with a ninth exemplary embodiment.
Fig. 14 is a perspective view illustrating a prior-art heat control device for a battery.

### DETAILED DESCRIPTION OF CARRYING OUT OF THE INVENTION

The preferred embodiments of the present invention are described hereinafter with reference to the accompanying drawings. Through the embodiments, like parts bear similar reference numbers and detailed explanations thereof are omitted.

### FIRST EXEMPLARY EMBODIMENT

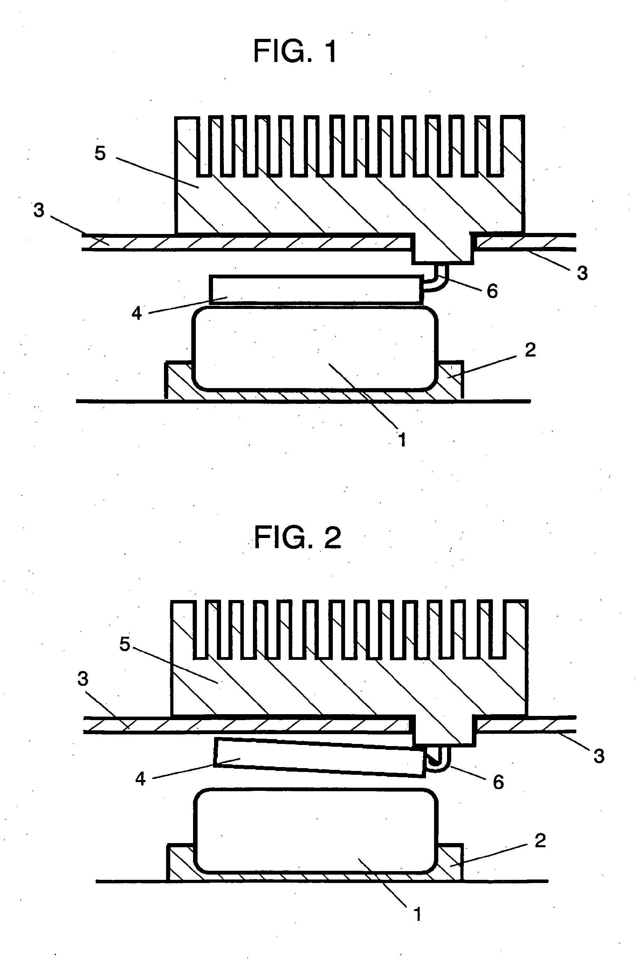

Figs. 1 and 2 show partially sectional views of a structure of a heat control device for a battery in accordance with the first exemplary embodiment of the present invention.

The heat control device of the present invention contains i) radiator 5; ii) heat-conducting plate 4 making contact with battery 1 that generates heat due to charging and discharging; and iii) heat controller 6 that connects between plate 4 and radiator 5. Battery 1 is held in the interior of equipment by battery holder 2. Fixed to outer wall 3 of equipment, radiator 5 is exposed to the outside of the equipment. Radiator 5, which is made of a material having good thermal conduction; namely, aluminum or copper, has a plurality of fins to dissipate heat into the air. Heat controller 6 is a heat-sensitive movable section having a bimetallic structure. A bimetallic structure is formed such that two metal thin plates having different thermal coefficients of expansion are bonded together; the structure transforms its shape in response to changes in temperature. As material with low thermal expansion, an alloy of nickel and iron is employed; on the other hand, as material with high thermal expansion, copper, nickel, and an alloy of copper and zinc are employed. According to the device of the embodiment, heat-conducting plate 4 contacts, through the expansion of heat controller 6, with battery 1 when the environmental temperature reaches approx. 20 °C. That is, plate 4 maintains contact with battery 1 as long as heat controller 6 keeps temperatures exceeding 20 °C. On the other hand, when the temperature of controller 6 gets lower than 20 °C, transformed heat controller 6 breaks off the contact between heat-conducting plate 4 and battery 1. Like radiator 5, heat-conducting plate 4 is made of a material having good thermal conduction.

Battery 1 contains six-in-series prismatic NiMH batteries (not shown) with dimensions 96 mm × 44 mm × 18 mm. Battery 1 has a capacity of 6.5 Ah. Battery 1 is held in the interior (not shown) of the electronic equipment by battery holder 2.

Hereinafter will be described how the heat control device of the embodiment works.

Heat generated through a battery-charging and discharging process increases the temperature of battery 1. Accordingly, heated-up air in the equipment raises the temperature of heat controller 6.

Heated controller 6 expands because of its bimetallic structure. When the temperature reaches 20 °C, heat-conducting plate 4 contacts with the surface of battery 1, as shown in Fig. 1, establishing thermal connection between battery 1 and radiator 5. As a result, radiator 5 absorbs the heat of battery 1, via heat-conducting plate 4 and heat controller 6, and dissipates the heat into air. This protects battery 1 from anomalous overheating.

On the other hand, when the temperature of controller 6 stays below 20 °C in spite of increased temperature of battery 1 through the charging and discharging process, controller 6 stays in a bend shape, as shown in Fig.2; heat-conducting plate 4 has no contact with battery 1. As another case, when battery 1 cools off below 20 °C from a temporally rise beyond 20 °C, controller 6 bends its shape, allowing heat-conducting sheet 24 to go away from battery 1. That is, radiator 5 is thermally separated from battery 1, thereby protecting battery 1 from over-dissipation. Heat controller 6 thus protects the battery from degradation in output power characteristics.

Table 1 shows data sets on voltage and surface temperature of batteries. The measurements are carried out so as to compare between i) a battery having the heat control device introduced in the embodiment, ii) a battery having a conventional radiator shown as prior-art example 1 in Fig. 14, and iii) a battery with no radiator. First, charge battery 1 for 4 hours with the application of a current large as 2A- at temperature of 20 °C. Next, let the charged battery stand for 4 hours under an environmental temperature of 30 °C. After that, discharge the battery at 150W for 10 seconds and then leave it stand for 120 seconds - repeat this cycle 10 times. During 10th discharging, measure the minimum value of battery voltage and the temperature of the surface of the battery. With the same procedures above, measurements on the battery were carried out, with the environmental temperature varied to 20 °C and -5 °C instead of 30 °C. Bimetallic heat controller 6 has a temperature of at least the environmental temperature in each measurement.

**Table 1**

| Environmental temperature | 30 °C | | 20 °C | | -5 °C | |
|---|---|---|---|---|---|---|
| | Voltage (V) | Surface temperature (°C) | Voltage (V) | Surface temperature (°C) | Voltage (V) | Surface temperature (°C) |
| Battery in embodiment 1 | 6.6 | 38.5 | 6.6 | 32.0 | 5.7 | 3.0 |
| Prior-art example 1 | 6.6 | 38.5 | 6.7 | 32.0 | 4.2 | -4.3 |
| Battery with no radiator | 6.7 | 51.0 | 6.3 | 42.0 | 5.8 | 3.1 |

As is apparent from Table 1, at the temperatures of 30 °C and 20 °C , the temperatures of the battery with no radiator soar up to 51.0 °C and 42.0 °C, respectively. Whereas, in the battery having the structure of the embodiment, the temperature can be kept below 40 °C by the control of bimetallic heat controller 6. The structure of the embodiment can thus suppress a rise in the battery temperature in the wake of the charging and discharging process, protecting the battery from being deteriorated.

On the other hand, the evaluation under the environmental temperature of -5 °C shows that the surface temperature of the battery of prior-art example 1 drops down to -4.3 °C. In the structure of prior-art example 1, battery container 101 and radiation fins 102 have thermal contact at all times. Therefore, the battery is always dissipating the heat into the outside, without the battery warmed by self-heating. As a result, the voltage of the battery of prior-art example 1 is extremely lowered to 4.2V. On the contrast, in the battery employing the structure of the embodiment, as shown in Fig. 2, heat controller 6 breaks off the thermal contact between battery 1 and radiator 5, so that heat of the battery is no longer dissipated outside the equipment. The battery can thus maintain the temperature by self-heating, which suppresses undesired drop in voltage of the battery.

According to the embodiment as described above, forming bimetallic heat controller 6 can control thermal connection between battery 1 and radiator 5, whereby heat controller 6 protects the battery from overheat, then performance degradation of the battery can be suppressed. Furthermore, in low-temperature ranges, the battery can maintain a proper temperature by self-heating, which protects the battery from degradation in output power characteristics.

Although, in the embodiment, heat conducting plate 4 makes contact with battery 1 when the battery has temperatures in excess of a specified degree, it is not limited thereto; instead of heat-conducting plate 4, forming controller 6 into a large size so as to have direct contact with battery 1 at a temperature beyond a specified degree can also provide the same effect.

In addition, a side of battery 1 and a part of heat-conducting plate 4 that faces to the side of battery 1 should preferably be flat so as to increase a contact area for effective heat conduction. Forming flat portions on two surfaces facing each other facilitates the control of heat controller 6 - thermal connection can be quickly established or broken off through the increased area.

The embodiment introduces a structure in which battery 1 contains 6-in-series prismatic NiMH batteries therein, however, the structure of battery 1 is not limited thereto; a structure having a single prismatic NiMH battery, a structure having one or more prismatic lithium-ion secondary battery, or having one or more lead acid battery can provide the same effect. Furthermore, a fuel battery is also applicable. Battery 1 may be formed of at least one cylindrical battery. In this case, the cylindrical battery should preferably be housed in a prismatic case, or as is the structure that will be described later in the second exemplary embodiment, the lower surface of radiator 5 should be curved along the cylindrical shape of the battery to increase the area for effective heat conduction.

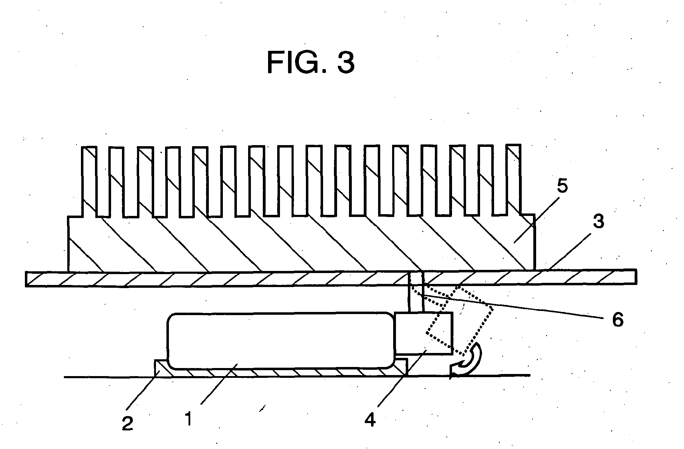

In the cylindrical battery that encircles electrodes therein, heat conduction can be easily established in a direction of the encircling axis of the cylindrical battery than in a radial direction of the battery. Also in the case of similarly structured prismatic battery, heat is easily transferred in a direction of the encircling axis than in a widthwise direction. For accelerating heat conduction, the structure in which heat-conducting plate 4 contacts with a widthwise cross-section of the encircling axis of the battery, as shown in Fig. 3, should be preferable.

Generally, a fuel battery has a structure in the form of a plurality of cells being stacked. When the heat control device of the embodiment is employed for such structured fuel cell, heat-conducting plate 4 should preferably be designed so as to contact with a side surface of the stacked structure for effective heat conduction. In this case, to avoid short circuit between the stacked cells, an insulating film is disposed on the surface of heat-conducting plate 4 with which the fuel cell contacts.

### SECOND EXEMPLARY EMBODIMENT

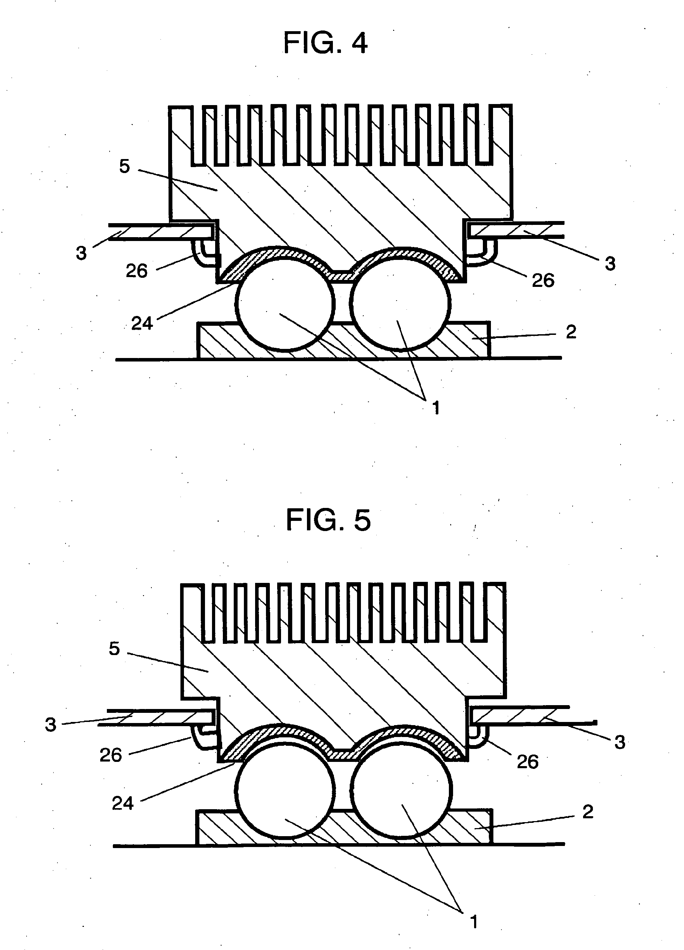

Figs. 4 and 5 show partially sectional views of a structure of a heat control device for a battery in accordance with the second exemplary embodiment.

The heat control device of the embodiment contains radiator 5 and heat controller 26 that connects between radiator 5 and outer wall 3 of the equipment. Radiator 5 is disposed through outer wall 3 so as to be partially exposed to the outside of the equipment. In radiator 5, the surface facing to battery 1 is curved so as to fit with the surface of the battery. Heat-conducting sheet 24 is attached to the curved surface of radiator 5. Heat-conducting sheet 24 contains material in which, for example, i) highly oriented graphite having a close-to-monocrystal structure, which is formed by processing polymer film through heat decomposition so as to have a graphite structure; ii) thermal conductive silicon rubber, or iii) acrylic rubber as a major composition, and to which aluminum or carbon graphite material is combined. Radiator 5 is thermally connected to battery 1 via heat-conducting sheet 24 to dissipate heat, which is generated through the charging and discharging process, into the outside of the equipment. Like heat controller 6 of the first exemplary embodiment, heat controller 26 also has a bimetallic structure so as to expand with the application of heat. When heated beyond 20 °C, controller 26 moves radiator 5 to battery 1 as shown in Fig. 4, making thermal contact between battery 1 and radiator 5 through heat-conducting sheet 24. When the temperature gets lower than 20 °C, controller 26 bends its shape into "J" as shown in Fig. 5, so that radiator 5 goes away from battery 1.

Battery 1 of the embodiment is formed of two-in-series cylindrical lithium-ion secondary batteries. The battery measures 18 mm in diameter and 65 mm in length, and has a capacity of 1200 mAh. Battery 1 is fixed within the interior (not shown) of the equipment by battery holder 2. Besides, battery 1 is separated by outer wall 3 of the equipment from the outside.

Next will be described how the heat control device of the embodiment works.

When heated, bimetallic heat controller 26 expands, so that radiator 5 comes down toward inside the equipment. When the temperature of controller 26 reaches 20 °C, heat-conducting sheet 24 comes in contact with the surface of battery 1 as shown in Fig. 4, by which thermal connection between battery 1 and radiator 5 is established. In this way, radiator absorbs heat from battery 1 through heat-conducting sheet 24 and dissipates the heat into air, thereby protecting battery 1 from anomalous overheating.

On the other hand, when the temperature of controller 26 stays below 20 °C in spite of increased temperature of battery 1 through the charging and discharging process, bimetallic controller 26 maintains its J shape. As another case, when battery 1 cools off below 20 °C from a temporally rise beyond 20 °C, controller 26 bends its shape into J shape, so that heat-conducting sheet 24 goes away from battery 1. Heat-conducting sheet 24 has no contact with battery 1. That is, radiator 5, which stays in place without moving down in the interior of the equipment, has no thermal connection with battery 1, thereby protecting battery 1 from over-dissipation. Heat controller 26 thus protects the battery from degradation in output power characteristics.

Table 2 shows data sets on voltage and surface temperature of batteries. The measurements are carried out so as to compare between i) a battery having the heat control device introduced in the embodiment, ii) a battery equipped with a conventional radiator shown in Fig. 14 - which is shown as prior-art example 2 in Table 2, and iii) a cylindrical battery with no radiator. In prior-art example 2, two cylindrical lithium-ion secondary batteries, each has the same size as that used in the embodiment, are accommodated in battery container 101. First, charge the battery with the application of a current large as 840 mA at temperature of 20 °C to obtain a voltage of 4.2V And then, further charge the battery, with the voltage of 4.2V being kept, until the current attenuates to 50 mA: Next, let the charged battery stand for 4 hours under an environmental temperature of 30 °C. After that, discharge the battery at 80W for 5 seconds and then leave it stand for 15 seconds - repeat this cycle 10 times. During 10th discharging, measure the minimum value of battery voltage and the temperature of the surface of the battery. With the same procedures, another measurements on the battery were carried out, with the environmental temperature varied to -10 °C instead of 30 °C. Bimetallic heat controller 26 has a temperature of at least the environmental temperature in each measurement.

**Table 2**

| Environmental temperature | 30 °C | | -10 °C | |
|---|---|---|---|---|
| | Voltage (V) | Surface temperature (°C) | Voltage (V) | Surface temperature (°C) |
| Battery in embodiment 2 | 7.2 | 38.0 | 6.3 | 1.4 |
| Prior-art example 2 | 7.2 | 39.0 | 5.2 | -5.2 |
| Battery with no radiator | 7.0 | 52.0 | 6.4 | 0.5 |

As is apparent from Table 2, at the temperature of 30 °C, the temperature of the battery with no radiator soars up to 52.0 °C. Whereas, in the battery having the structure of the embodiment, the temperature can be kept below 40 °C by the control of bimetallic heat controller 26. The structure of the embodiment can thus suppress undesired rise in the battery temperature in the wake of the charging and discharging process, protecting the battery from being deteriorated.

On the other hand, the evaluation at the environmental temperature of -10 °C shows that the surface temperature of the battery in prior-art example 2 drops down to -5.2 °C. In the case of prior-art example 2, battery container 101 and radiation fins 102 have thermal contact at all times. Therefore, the battery is always dissipating the heat into the outside. As a result, the voltage of the battery of prior-art example 2 is extremely lowered to 5.2V. On the contrast, in the battery employing the structure of the embodiment, as shown in Fig. 5, heat controller 26 breaks off the thermal contact between battery 1 and radiator 5, so that heat of the battery is no longer dissipated outside the equipment. The battery can thus maintain the temperature by self-heating, which suppresses undesired drop in voltage of the battery.

According to the embodiment, as described above, forming bimetallic heat controller 26 controls the thermal connection between battery 1 and radiator 5. This protects the battery from not only being overheated, but also being deteriorated. Furthermore, in low temperature ranges, the battery can maintain a proper temperature by self-heating, which protects the battery from degradation in output power characteristics.

Although the structure of the embodiment employs heat-conducting sheet 24 to obtain an intimate contact between battery 1 and radiator 5, it is not limited thereto; instead of disposing sheet 24, forming the surface of radiator 5 making contact with battery 1 into a proper shape can provide the similar effect.

### THIRD EXEMPLARY EMBODIMENT

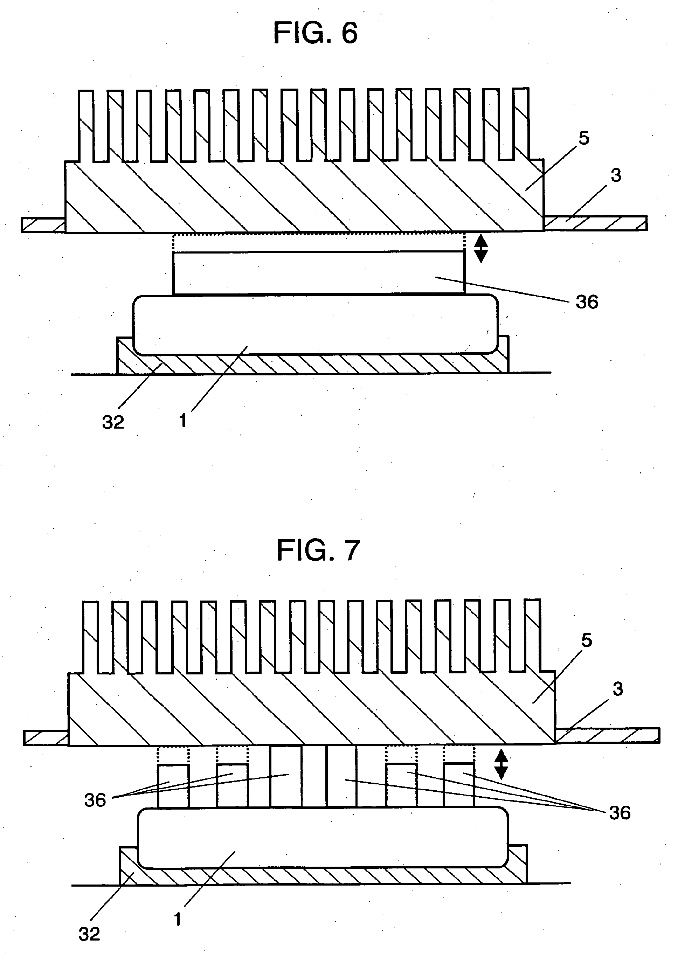

Fig. 6 shows a partially sectional view of a structure of a heat control device for a battery of the third exemplary embodiment.

The heat control device of the embodiment contains radiator 5 and heat controller 36. Heat controller 36 is disposed so as to have contact with battery 1 that generates heat through charging and discharging. Fixed to outer wall 3 of equipment, radiator 5 is exposed to the outside of the equipment. Heat controller 36 is disposed between battery 1 and radiator 5. Battery 1 is held in the equipment by battery holder 32.

The structure of the first exemplary embodiment contains: i) heat-conducting plate 4 making contact with battery 1; and ii) heat controller 6 connecting between plate 4 and radiator 5. As a substitute for them, the structure of the third embodiment has heat controller 36. Battery holder 32 is made of an elastic material. For the rest, the structure of the embodiment is the same as that of the first exemplary embodiment.

Heat controller 36 has a columnar shape and expands by heat generated from battery 1. Controller 36 is made of a thermally conductive material having a high coefficient of linear expansion, for example, should be made of metal such as aluminum, zinc, and lead. The dimension of heat controller 36 is determined so that the expanded structure reaches radiator 5 at a temperature of 20 °C or higher.

Hereinafter will be described how the heat control device of the embodiment works.

The temperature of battery 1 becomes higher as battery 1 generates heat through the charging and discharging processes. Heat controller 36 expands by the heat and reaches radiator 5 when the temperature of controller 36 reaches 20 °C. At this moment, thermal connection between battery 1 and radiator 5 is established. In this way, radiator 5 absorbs heat from battery 1 via heat controller 36 and dissipates the heat into air, thereby protecting battery 1 from anomalous overheating.

On the other hand, when the temperature of controller 36 stays below 20 °C in spite of increased temperature of battery 1 through the charging and discharging process, controller 36 is maintained out-of-contact with radiator 5. As another case, when battery 1 cools off below 20 °C from a temporally rise beyond 20 °C, heat controller 36 contracts and goes away from radiator 5. This breaks off the thermal connection between radiator 5 and battery 1, protecting battery 1 not only from over-dissipation, but also from degradation in output power characteristics.

Heat controller 36 of the embodiment directly contacts with battery 1. Compared to the structures of the first and second embodiments, heat controller 36 of the embodiment provides a quicker response to heat generated by the charging and discharging process.

The explanation above introduces heat controller 36 as a single structure, as shown in Fig. 6. In the case that a large sized battery 1 is employed or battery 1 is formed of a plurality of electric cells, battery 1 is not uniformly heated; generally, the middle part of the battery tends to have a higher temperature. Therefore, it is preferable to form a plurality of heat controllers 36, as shown in Fig. 7. With the structure above, thermal connection between battery 1 and radiator 5 is quickly established by the heat controllers disposed where temperature easily rises, thereby battery 1 has a uniform temperature. Ensuring a uniform temperature of battery 1 that is formed of a plurality of electric cells also gives a uniform degree of deterioration of the electric cells, thereby effectively suppressing variations in characteristics among the cells.

According to the embodiment, battery holder 2 is made of an elastic material. The elasticity can relax the stress caused between battery 1 and radiator 5 due to expansion of heated controller 36, when the temperature of heat controller 36 exceeds 20 °C. Instead of such elastic battery holder 2, a spring or the like material can be employed at which outer wall 3 of the equipment holds radiator 5.

In addition, like the structure in the second embodiment, a heat-conducting sheet can be disposed at sections having contact with heat controller 36 on the lower surface of radiator 5. Similarly, the heat-conducting sheet can be disposed on the top or bottom surfaces of heat controller 36.

Table 3 shows data sets on voltage and surface temperature of batteries. The measurements are carried out so as to compare between i) a battery having the heat control device introduced in the embodiment, ii) a battery having a structure introduced in the first embodiment, and iii) a battery with no radiator. The evaluation is carried out at an environmental temperature of 30 °C under the condition and the structure of battery 1 similar to those employed in the first embodiment. In Tabel 3 cell A indicates an outmost cell among six cells connected in series of battery 1 and cell B indicates a cell next to cell A to the middle part of battery 1, cell C indicates a cell next to cell B in the same direction.

**Table 3**

| | Surface temperature (°C) | | | | Total Voltage (V) |
|---|---|---|---|---|---|
| Measured location | Cell A | Cell B | Cell C | Average | |
| Battery in embodiment 3 | 37.0 | 38.0 | 39.0 | 38.0 | 6.6 |
| Battery in embodiment 1 | 37.1 | 38.5 | 39.9 | 38.5 | 6.6 |
| Battery with no radiator | 46.0 | 51.0 | 56.0 | 51.0 | 6.7 |

As is apparent from Table 3, at the temperature of 30 °C, the battery with no radiator has high temperature of 56.0 °C at the middle part of it. Similarly, the battery of the first embodiment is heated as high as 40 °C in the middle part of it. On the contrast, the temperature of the battery of the third embodiment is kept below 40 °C even in the middle part. This is because that heat dissipation by mid-positioned heat controllers 36 occurs earlier than outer parts. Compared to the structure of the first embodiment, heat controller 36 of the third embodiment, because of having direct contact with battery 1, can be sensitive to heat generation in battery 1. The quick response to rise in the temperature can thus keep the average value of the surface temperature lower. The structure of the embodiment, as described above, can suppress rises in the temperature of the battery in the wake of the charging and discharging process more sensitively, protecting the battery from being deteriorated. In particular, disposing a plurality of heat controllers 36 can minimize degradation in sections easy to be heated therefore easy-to-be deteriorated.

### FOURTH EXEMPLARY EMBODIMENT

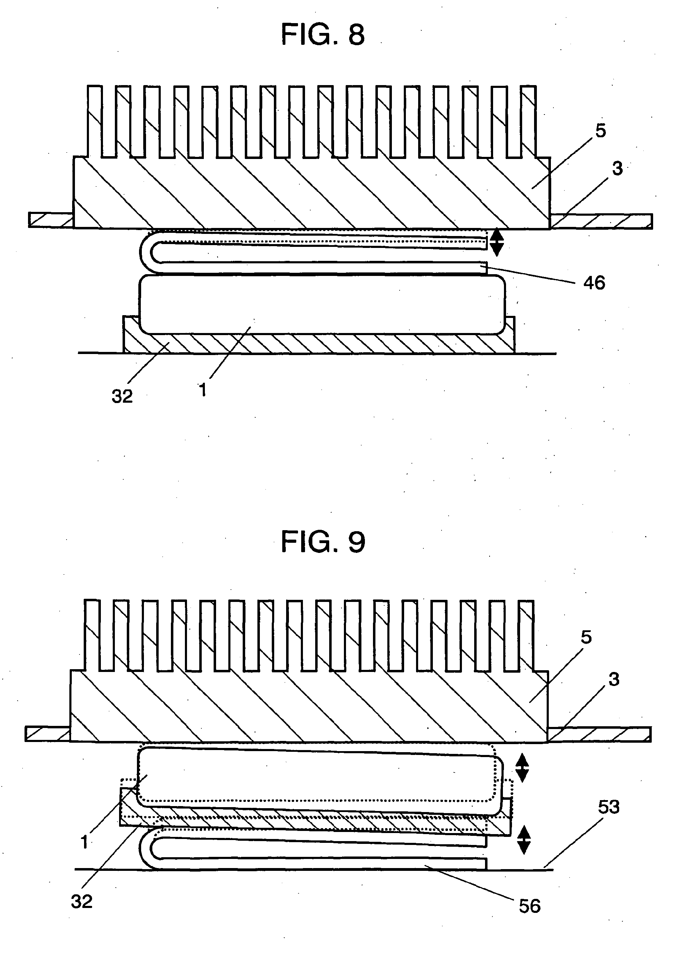

Fig. 8 shows a partially sectional view of a structure of a heat control device for a battery in accordance with the fourth exemplary embodiment.

The heat control device of the embodiment contains radiator 5 and heat controller 46. Heat controller 46 is disposed so as to have contact with battery 1 that generates heat through charging and discharging. Fixed to outer wall 3 of equipment, radiator 5 is exposed to the outside of the equipment.

In the third embodiment, heat controller 36 has a columnar-shaped structure that expands on the application of heat. Whereas, the fourth embodiment employs a bimetallic flat plate formed into a U-shape in section for heat controller 46. For the rest, the structure of the embodiment is the same as that of the third exemplary embodiment.

For heat controller 46, material with a high expansion is used for the inside of the "U" so as to open up the space between the arms of the "U" as controller 46 is heated. The dimension of heat controller 46 is determined so that the expanded arm reaches radiator 5 at a temperature of approx. 20 °C. That is, heat controller 46 contacts with battery 1 at a temperature of 20 °C or higher. When the temperature falls below 20 °C, heat controller 46 goes away from battery 1.

Hereinafter will be described how the heat control device of the embodiment works.

The temperature of battery 1 becomes higher as battery 1 generates heat through the charging and discharging processes. Received the heat, controller 46 expands, whereby the space between the arms of the "U" is opened up, and the surface of the upper arm contacts with radiator 5 when the temperature of controller 46 reaches 20 °C. At this moment, thermal connection between battery 1 and radiator 5 is established. In this way, radiator 5 absorbs heat from battery 1 via heat controller 46 and dissipates the heat into air, thereby protecting battery 1 from anomalous overheating. As heat controller 46 behaves like a spring because of its bimetallic structure, there is no need to employ an elastic material for battery holder 2.

On the other hand, when the temperature of controller 46 stays below 20 °C in spite of increased temperature of battery 1 through the charging and discharging process, controller 46 is maintained out of contact with radiator 5. As another case, when battery 1 cools off below 20 °C from a temporally rise beyond 20 °C, the space between the arms of the "U" becomes narrower, i.e., heat controller 46 goes away from radiator 5. This breaks off the thermal connection between radiator 5 and battery 1, protecting battery 1 from not only over-dissipation but also degradation in output power characteristics. In this way, the structure of the embodiment provides the same effect as is in the structure of the third embodiment.

Although heat controller 46 of the embodiment is U-shaped, it is not limited thereto: a structure having more than one bend, such as S-shaped structure, can be employed. Generally J-shaped heat controller 46 also can be used. In this case, a heat-conducting plate is connected to the surface of controller 46 that faces to radiator 5. With the structure, heat is conveyed from battery 1, via heat controller 46 and the heat-conducting plate, to radiator 5, when battery 1 has undesired rise in temperature.

Like in the third embodiment, forming a plurality of heat controllers 46 is applicable to the structure of the fourth embodiment.

### FIFTH EXEMPLARY EMBODIMENT

Fig. 9 shows a partially sectional view of a structure of a heat control device for a battery in accordance with the fifth exemplary embodiment.

The heat control device of the embodiment contains radiator 5 and heat controller 56. Heat controller 56 is disposed so as to have contact with battery 1 that generates heat through charging and discharging. Fixed to outer wall 3 of equipment, radiator 5 is exposed to the outside of the equipment. Heat controller 56 of the embodiment is disposed between battery 1 and inner wall 43 of the equipment via battery holder 2.

Heat controller 56 is a thermally sensitive movable section, which is made of a shape-memory alloy, having a U shape in section. A shape-memory alloy has the property of putting a shape back into a preformed shape when the temperature exceeds a certain temperature (i.e., transformation temperature), even if it has been transformed at temperatures lower than the transformation point. The shape-memory alloy consists of, for example, an indium-tellurium alloy, or a nickel-titanium alloy. Heat controller 56 has a structure having a composition determined so as to have a transformation temperature of 20 °C, and then the structure is formed into a U-shape at a temperature of 20 °C or higher - such structured controller 56 puts its shape into the preformed "U" at a temperature of 20 °C or higher. When the temperature stays below 20 °C, the interval between the "U" becomes smaller in under the weight of battery 1. That is, the dimension of heat controller 56 is determined so that the controller 56 contacts battery 1 with radiator 5 at a temperature of 20 °C or higher, on the other hand, controller 56 keeps radiator 5 away from battery 1 under temperatures lower than 20 °C. For the rest, the structure of the embodiment is the same as that of the third exemplary embodiment.

Hereinafter will be described how the heat control device of the embodiment works.

The temperature of battery 1 becomes higher as battery 1 generates heat through the charging and discharging processes. Heated controller 56 changes its shape into a preformed opened-up "U" when the temperature of controller 56 reaches 20 °C. The transformation of controller 56 lifts up battery 1, thereby battery 1 contacts directly with radiator 5. At this moment, thermal connection between battery 1 and radiator 5 is established. In this way, radiator 5 absorbs heat from battery 1 and dissipates the heat into air, thereby protecting battery 1 from anomalous overheating. As shape-memory alloy-made heat controller 56 behaves like a spring, there is no need to employ an elastic material for battery holder 2.

On the other hand, when the temperature of controller 56 stays below 20 °C in spite of increased temperature of battery 1 through the charging and discharging process, battery 1 is away from radiator 5. That is, radiator 5 is thermally separated from battery 1. Controller 56 can thus protect battery 1 from not only over-dissipation but also degradation in output power characteristics. When battery 1 cools off below 20 °C after the temperature of controller 56 gets higher than 20 °C so thatcontroller 56 changes its shape into aits preformed opened-up "U", the interval between the two arms of the "U" becomes narrower in under the weight of battery 1, allowing battery 1 to go away from radiator 5.

As is the structure introduced in the third embodiment, heat controller 56 of the fifth embodiment directly contacts with battery 1. Therefore, heat controller 56 of the embodiment can be sensitive to a rise in temperature. The direct contact between battery 1 and radiator 5 of the fifth embodiment encourages heat conduction.

Table 4 shows a data set on voltage and surface temperature of a battery having the heat control device of the embodiment. The evaluation is carried out under the condition and the structure of battery 1 similar to those employed in the first embodiment.

**Table 4**

| Environmental temperature | 30 °C | | 20 °C | | -5 °C | |
|---|---|---|---|---|---|---|
| | Voltage (V) | Surface temperature (°C) | Voltage (V) | Surface temperature (°C) | Voltage (V) | Surface temperature (°C) |
| Battery in embodiment 5 | 6.6 | 37.5 | 6.6 | 30.0 | 5.7 | 3.0 |

As is apparent from Tables 1 and 4, the structure of the embodiment, in which battery 1 has direct contact with radiator 5, can dissipate the heat more effective than that of the first embodiment.

Although a shape-memory alloy is employed for heat controller 56 in the embodiment, a bimetallic heat controller, like the structure in the fourth embodiment, can provide the same effect.

### SIXTH EXEMPLARY EMBODIMENT

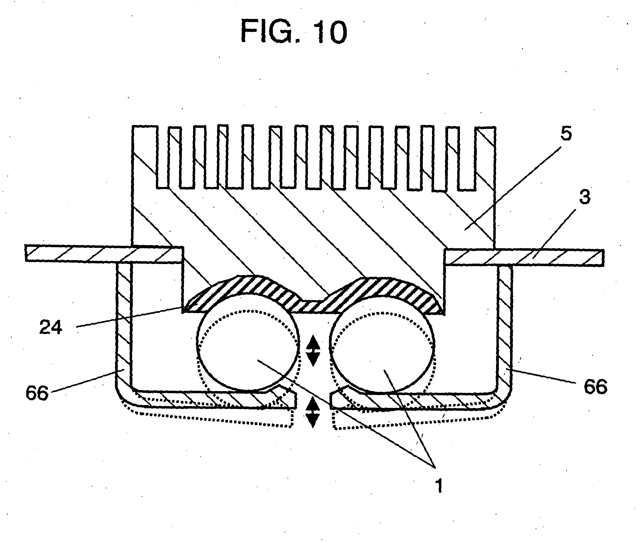

Fig. 10 shows a partially sectional view of a structure of a heat control device for a battery in accordance with the sixth exemplary embodiment.

The heat control device of the embodiment contains radiator 5 and heat controller 66. Heat controller 66 is disposed so as to have contact with battery 1 that generates heat through charging and discharging. Fixed to outer wall 3 of equipment, radiator 5 is exposed to the outside of the equipment. Radiator 5 is thermally connected, via heat-conducting sheet 24, to battery 1. One end of heat controller 66, which is formed into a L-shape, is fixed to outer wall 3 of the equipment, the other end holds battery 1 in the vicinity thereof.

Heat controller 66 is a thermally sensitive movable section with a shape of an "L", which is made of a shape-memory alloy. Heat controller 66 has a structure having a composition determined so as to have a transformation temperature of 20 °C, and then the structure is formed into an L-shape at a temperature of 20 °C or higher - such structured controller 66 puts its shape into the preformed "L" at a temperature of 20 °C or higher. When the temperature stays below 20 °C, the angle between the "L" is kept larger because of the weight of battery 1. That is, the dimension of heat controller 66 is determined so that the controller 66 contacts battery 1 with radiator 5 at a temperature of 20 °C or higher, while the controller keeps radiator 5 away from battery 1 when the temperature is lower than 20 °C. For the rest, the structure of the embodiment is the same as that of the second exemplary embodiment.

Hereinafter will be described how the heat control device of the embodiment works.

The temperature of battery 1 becomes higher as battery 1 generates heat through the charging and discharging process. Heated controller 66 changes its shape into a preformed "L" when the temperature of controller 66 reaches 20 °C. The transformation of controller 66 lifts up battery 1, thereby battery 1 contacts with radiator 5. At this moment, thermal connection between battery 1 and radiator 5 is established. In this way, radiator 5 dissipates heat of battery 1 into air, thereby protecting battery 1 from anomalous overheating.

On the other hand, when the temperature of controller 66 stays below 20 °C in spite of increased temperature of battery 1 through the charging and discharging process, battery 1 is away from heat-conducting sheet 24. That is, radiator 5 is thermally separated from battery 1. Controller 66 can thus protect battery 1 from not only over-dissipation but also degradation in output power characteristics. When battery 1 cools down to lower than 20 °C after the temperature of controller 66 gets higher than 20 °C so that controller 66 changes its shape into its preformed "L", the angle between the two arms of the "L" becomes larger in under the weight of battery 1, thereby battery 1 goes away from radiator 5.

Like the structure introduced in the third embodiment, heat controller 66 of the sixth embodiment directly contacts with battery 1. Therefore, heat controller 66 can be sensitive to a rise in temperature. The direct contact between battery 1 and radiator 5 also encourages heat conduction.

Table 5 shows a data set on voltage and surface temperature of a battery having the heat control device of the embodiment. The evaluation is carried out under the condition and the structure of battery 1 similar to those employed in the second embodiment.

**Table 5**

| Environmental temperature | 30 °C | | -10 °C | |
|---|---|---|---|---|
| | Voltage (V) | Surface temperature (°C) | Voltage (V) | Surface temperature (°C) |
| Battery in embodiment 6 | 7.2 | 37.0 | 6.3 | 1.4 |

As is apparent from Tables 2 and 5, the structure of the embodiment, in which heat controller 66 has direct contact with battery 1, can be more sensitive to heat generated through the charging and discharging process than the structure of the second embodiment. This works in further suppressing rises in temperature of battery 1.

Although a shape-memory alloy is employed for heat controller 66 in the embodiment, a bimetallic heat controller, like the structure in the fourth embodiment, can provide the same effect.

Although the embodiment introduces a structure with no battery holder, the structure may contain a battery holder therein. In this case, it is preferable that a protrusion is disposed at one end supporting battery 1 as shown in Fig. 10, or a dent (not shown) is made in the surface on which battery 1 is mounted for supporting the battery. Heat controller 66 may also contain a battery holder, as a separate structure, on the surface that bears battery 1.

### SEVENTH EXEMPLARY EMBODIMENT

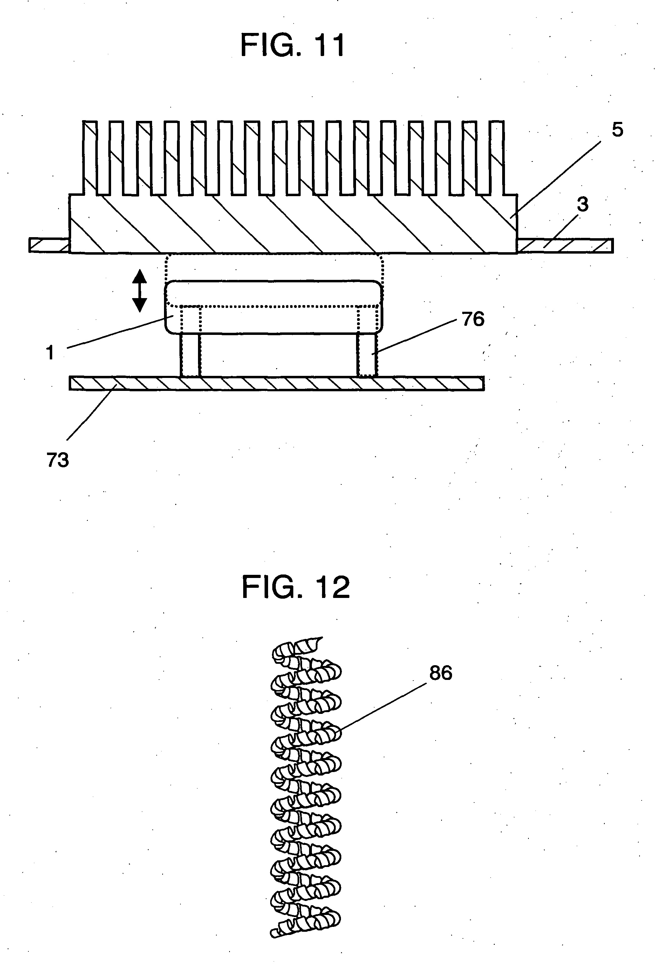

Fig. 11 shows a partially sectional view of a structure of a heat control device for a battery in accordance with the seventh exemplary embodiment.

The heat control device of the embodiment contains radiator 5 and heat controller 76. Heat controller 76 is disposed so as to have contact with battery 1 that generates heat through charging and discharging. Fixed to outer wall 3 of equipment, radiator 5 is exposed to the outside of the equipment. In the third embodiment, heat controller 36 is disposed between battery 1 and radiator 5. Whereas, in this seventh embodiment, heat controller 76 is disposed between battery 1 and inner wall 73 of the equipment. Such structured heat controller 76 also serves as battery holder 2. For the rest, the device of the embodiment has the structure as that of the third embodiment.

Like heat controller 36, heat controller 76 also expands by the heat of battery 1. And the dimension of heat controller 76 is determined so that the expanded structure lifts up battery 1 to contact with radiator 5 at a temperature of 20 °C or higher. Unlike heat controller 36, heat controller 76 is not necessarily to be a conductive material like metal; the controller can be made of material having a high coefficient of linear expansion and having no transformation in the temperature range of the charging and discharging process, namely, nylon resin, silicon resin, and the like.

As aforementioned in the third embodiment, a spring or the like (not shown) is employed for a section of outer wall 3 that holds radiator 5. The elasticity can relax the stress caused between radiator 5, battery 1 and inner wall 73 due to expansion of heated controller 76, when the temperature of heat controller 76 exceeds 20 °C.

Hereinafter will be described how the heat control device of the embodiment works.

The temperature of battery 1 becomes higher as battery 1 generates heat through the charging and discharging process. Received the heat, controller 76 expands and battery 1 reaches radiator 5 when the temperature of controller 76 reaches 20 °C. At this moment, thermal connection between battery 1 and radiator 5 is established. In this way, the heat of battery 1 is directly transferred to radiator 5 and dissipated into air, so that battery 1 is protected from anomalous overheating.

On the other hand, when the temperature of controller 76 stays below 20 °C in spite of increased temperature of battery 1 through the charging and discharging process, controller 76 is maintained out of contact with radiator 5. As another case, when battery 1 cools off below 20 °C from a temporally rise beyond 20 °C, heat controller 76 contracts and battery 1 goes away from radiator 5. This breaks off the thermal connection between radiator 5 and battery 1, protecting battery 1 from not only over-dissipation but also degradation in output power characteristics. In this way, the structure of the embodiment provides the same effect as that of the fifth embodiment.

In addition, like the structure in the second embodiment, a heat-conducting sheet can be disposed on a section having contact with battery 1 on the lower surface of radiator 5

According to the embodiment, heat controller 76 is disposed on inner wall 73 of the equipment; the controller can be disposed on a substrate or the like. In this case, it is preferable that the substrate be fixed to the inner wall via a spring and the like. Such a structure can relax the stress caused between radiator 5 and battery 1 due to expansion of heated controller 76, when the temperature of heat controller 76 exceeds 20 °C.

### EIGHTH EXEMPLARY EMBODIMENT

Fig. 12 is a perspective view illustrating the heat controller of a heat control device for a battery in accordance with the eighth exemplary embodiment.

The heat control device of the embodiment differs from the device of the seventh embodiment in employing heat controller 86, instead of heat controller 76. For the rest, the two structures have no difference.

Heat controller 86 has a structure in which bimetallic material is curled and then formed into a helical shape. The double helix expands by the heat of battery 1. The dimension of heat controller 86 is determined so that the expanded structure contacts battery 1 with radiator 5 at a temperature of 20 °C or higher. This structure provides the same effect as that of the seventh embodiment.

Heat controller 86 can relax, by its own spring-like shape, the stress caused between radiator 5, battery 1 and inner wall 73 due to expansion of heated controller 86, when the temperature of heat controller 86 exceeds 20 °C.

### NINTH EXEMPLARY EMBODIMENT

Fig. 13 shows a partially sectional view of a structure of a heat control device for a battery in accordance with the ninth exemplary embodiment.

In addition to the structure of the seventh embodiment, the heat control device of the embodiment further contains heat source 94 disposed on substrate 93, and heat conductor 95 that establishes thermal connection between heat source 94 and battery 1. For example, in the case that the equipment is an information terminal device like a personal computer, heat source 94 corresponds to the central processing unit (CPU), or in the case that the equipment is a vehicle, heat source 94 is an engine. Heat controller 76 contracts, as the temperature gets lower. Considering the coefficient of linear expansion of heat controller 76, the dimension of heat conductor 95 is determined so as to contact with battery 1 at temperatures of 0 °C or lower. Heat conductor 95 can be formed of metal and the like; however, with a view to enhancing intimate contact with battery 1 and heat source 94 and suppressing stress due to thermal expansion, it should preferably be formed of material similar to heat-conducting sheet 24 described in the second embodiment.

When the temperature stays beyond 0 °C, the aforementioned structure behaves similarly to that in the seventh embodiment. When the environmental temperature gets lower, accordingly the temperature of heat controller 76 drops down to 0 °C or lower, heat conductor 95 makes contact with battery 1. This establishes thermal connection between heat source 94 and battery 1, so that heat source 94 increases the temperature of battery 1. The heating-up more effectively protects battery 1 from degradation in output power characteristics than the case in the fourth embodiment.

Table 6 shows a data set on voltage and surface temperature of a battery having the heat control device of the embodiment. A CPU with power consumption of about 60 W is used for heat source 94. For the rest, the evaluation is carried out under the condition and the structure of battery 1 similar to those employed in the second embodiment.

**Table 6**

| Environmental temperature | 30 °C | | -10 °C | |
|---|---|---|---|---|
| | Voltage (V) | Surface temperature (°C) | Voltage (V) | Surface temperature (°C) |
| Battery in embodiment 9 | 7.2 | 37.0 | 6.6 | 7.0 |

It is apparent from Tables 2 and 6 that the structure of the embodiment, since heat controller 76 directly contacts with battery 1, can suppress temperature rise of battery 1, as effective as the case in the sixth embodiment. Furthermore, when the environmental temperature drops to -10 °C, heat from the CPU as heat source 94 transfers via heat conductor 95 to battery 1. This increases the temperature of battery 1, protecting battery 1 from degradation in output power characteristics.

Instead of heat controller 76, employing heat controller 56 described in the fifth embodiment or heat controller 86 in the eighth embodiment can also provide the same effect.

Throughout the embodiments, the heat controller is supposed to activate the control of thermal connection between the battery and the radiator at a temperature of 20 °C. The heat controller may have a temperature range of 10 °C to 20 °C so as to enhance heat dissipation in high temperatures and to protect over-dissipation in low temperatures. As described in the first embodiment, the structure throughout the embodiments can be employed for various kinds of batteries, as long as the battery generates heat through the charging and discharging process.

The heat controller should be formed of a material easy to transform by heat, preferably, formed of metal. The structure of the embodiments can provide a considerable advantage in the case that the environmental temperature is low, or in the case that the equipment needs intermittent operations of high-power discharging, in particular, such as a compact space-saving electronic device with a low cost.

In the second, third, and sixth to ninth embodiments, an explanation is given a structure having two or more heat controllers as an example. The structure with two or more heat controllers can be applicable with no problems to all the embodiments of the present invention. As described above, thermal connection between the battery and the radiator is governed by the heat controller. The shape of the heat controller is not limited to a specific one, as long as the controller can properly control the thermal connection. Although a bimetallic heat controller is introduced in the first, second, and fourth embodiments, and a controller made of shape-memory alloy is explained in the fifth and sixth embodiments, the material is not limited thereto.

Although the description is given the case throughout the embodiments in which battery 1 is formed of a plurality of cells, it is not limited thereto; battery 1 can be a single cell. In the case that battery 1 is formed of a plurality of cells, the number of the cells and connections (i.e., in-series or parallel) are not limited.

In the fifth through ninth embodiments, the heat controller moves the battery. In this case, a guide section (not shown) should preferably be disposed to place the battery in a right position.

As described so far, the heat control device for a battery of the present invention provides a simple structure having a heat controller. The device can dissipate heat generated in a battery to outside, protecting the battery from over-heating. As a result, the battery is protected from degradation. On the other hand, when the temperature of the battery falls down, the device protects the battery from over-dissipation, thereby protecting the battery from degradation in output power characteristics. In other words, the heat control device provides an effective use of batteries under various environments.

## Claims

1. A heat control device for a battery comprising:
a heat controller that transforms its shape by heat generated in a battery; and
a radiator for dissipating the heat from the battery.

2. The heat control device for a battery of Claim 1, wherein the heat controller establishes thermal connection between the radiator and the battery at a temperature at least a predetermined first temperature.

3. The heat control device for a battery of Claim 1, wherein the heat controller breaks off the thermal connection between the radiator and the battery at a temperature lower than a predetermined first temperature.

4. The heat control device for a battery of Claim 2, wherein the heat controller establishes the thermal connection, via the heat controller, between the radiator and the battery.

5. The heat control device for a battery of Claim 2, wherein the heat controller physically contacts the radiator to the battery.

6. The heat control device for a battery of Claim 2, wherein the heat controller establishes the thermal connection between the radiator and the battery by bending the heat controller itself.

7. The heat control device for a battery of Claim 2, wherein the heat controller establishes the thermal connection between the radiator and the battery by expanding the heat controller itself.

8. The heat control device for a battery of Claim 1, wherein the heat control device has a plural number of the heat controller.

9. The heat control device for a battery of Claim 1 further including:
a heat source; and
a heat conductor for transferring heat generated from the heat source to the battery at a temperature at most a predetermined second .

10. The heat control device for a battery of Claim 1, wherein the controller moves the battery.

11. The heat control device for a battery of Claim 1, wherein the controller moves the radiator.
